# EUROPEAN PATENT APPLICATION

(11) **EP 1 621 798 A2**
(43) Date of publication of application: **01.02.2006**
(21) Application number: 05016158.7
(22) Date of filing: 26.07.2005
(51) Int. Cl.: F16H 7/08

(54) **Blade tensioner**

(30) Priority: 29.07.2004 JP 2004221026; 12.07.2005 US 179329
(71) Applicant: BorgWarner Morse TEC Japan K.K., Nabari, Mie 518-0495 (JP)
(72) Inventor: Wake, Junichi c/o BorgWarner Morse TEC Japan K.K., Mie 518-0495 (JP)
(74) Representative: Coggi, Giorgio

(57) **Abstract**

A blade tensioner (1) includes a blade shoe (2) with a chain sliding face (2a) bending in an arch-like shape and a blade spring (3), arranged on a side opposite to the chain sliding face (2a) of the blade shoe (2), that applies spring force to a chain through the blade shoe (2). The tensioner (1) also includes a bracket (4) with a pin (41) rotatably supporting a proximal end section of the blade shoe (2) and a sliding section (5) made of resin slidably supporting an end of the blade spring (3) on the distal end section of the blade shoe (2) when the blade shoe (2) is deformed. The distal end section of the blade shoe (2) preferably includes a pair of guide sections (22A,22B) vertically provided along both surfaces of a sliding section (5) of the bracket (4).

## Description

### REFERENCE TO RELATED APPLICATIONS

This application claims an invention which was disclosed in Japanese application number 2004-221026, filed July 29, 2004, entitled "BLADE TENSIONER". The benefit under 35 USC§119(a) of the Japanese application is hereby claimed, and the aforementioned application is hereby incorporated herein by reference.

### BACKGROUND OF THE INVENTION

### FIELD OF THE INVENTION

The present invention relates to a blade-type tensioner including a blade shoe with a chain sliding surface and a leaf-spring-shaped blade spring to impart spring force to the blade shoe.

### DESCRIPTION OF RELATED ART

Blade-type tensioners impart tension to chains such as timing chains in automotive engines or auxiliary drive chains for oil pumps.

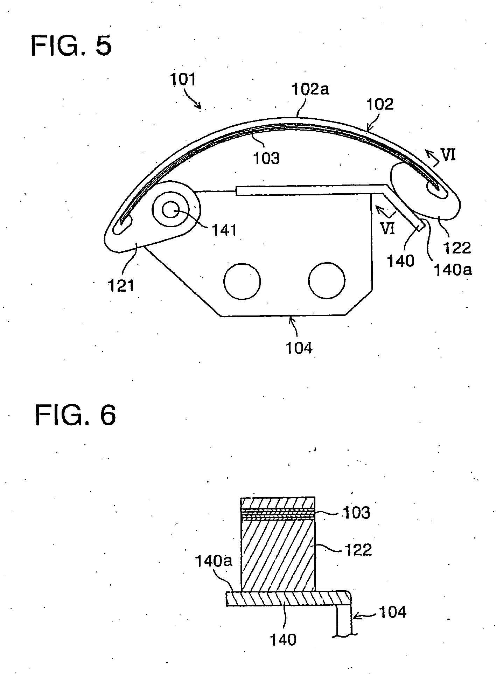

As shown in FIG. 5, a prior art blade-type tensioner (101) generally includes a plastic blade shoe (102) having an arcuately shaped chain sliding surface (102a) and a plurality of blade springs (103) provided on the opposite side of the blade shoe (102) from the chain sliding surface (102a) to impart a spring force to a chain (not shown) via the blade shoe (102). The blade tensioner (101) also includes a metal bracket member (104) that has a support shaft portion (141) swingably supporting a proximal end portion (121) of the blade shoe (102) and a sliding portion (140) slidably supporting a distal end portion (122) of the blade shoe (102) (see Japanese patent laid-open publication No. 2000-234656). The sliding portion (140) is formed by folding the sheet metal perpendicularly to the bracket member body, as shown in FIG. 6.

During operation, when the chain slides on the chain sliding surface (102a) of the blade shoe (102), a resilient force due to elastic deformation of the blade spring (103) is applied to the chain to maintain tension in the chain. Also, when the chain tension varies during operation, the distal end portion (122) of the blade shoe (102) slides on the sliding surface (140a) of the slide portion (140) of the bracket member (104) and the proximal end portion (121) swings around the support shaft portion (141). Thereby, the radius of curvature of the blade spring (103) varies and spring force due to deformation of the blade spring (103) is exerted on the chain.

However, in the prior art blade-type tensioner, the sliding portion (140) of the bracket member (104) is formed by bending the sheet metal, thus increasing manufacturing cost.

Therefore, there is a need in the art for a blade-type tensioner with decreased manufacturing cost.

### SUMMARY OF THE INVENTION

A blade-type tensioner according to one embodiment of the present invention includes a blade shoe with an arcuately curved chain sliding surface and a blade spring provided on the opposite side of the blade shoe from the chain sliding face to exert a spring force on a chain via the blade shoe. The blade spring is preferably a leaf-spring-shaped spring. The tensioner also includes a bracket member that has a support shaft portion to rotatably support a proximal end portion of the blade shoe and a slide portion to slidably support an end of the blade spring at a distal end portion of the blade shoe during deformation of the blade shoe and the blade spring. The slide portion is preferably made of plastic.

According to the first embodiment of the present invention, because the slide portion of the bracket member is formed of plastic, bending the bracket member is no longer required, thereby reducing manufacturing cost. Also, in this embodiment, since the slide portion contacts the blade spring, the blade spring moves smoothly along the slide portion to prevent seizure of the slide portion as the blade spring deforms.

A blade-type tensioner according to another embodiment of the present invention includes a blade shoe having an arcuately curved chain sliding surface and a blade spring provided on the opposite side of the blade shoe from the chain sliding surface to exert a spring force on a chain via the blade shoe. The blade spring is preferably leaf-spring shaped. The tensioner also includes a bracket member that has a support shaft portion to rotatably support a proximal end portion of the blade shoe and a plastic slide portion to slidably support a distal end portion of the blade shoe during deformation of the blade shoe and the blade spring.

According to the second embodiment of the present invention, as with the first embodiment of the invention, since the slide portion of the bracket member is formed of plastic, bending the bracket member is no longer required, thereby reducing manufacturing cost.

In one embodiment, the entire bracket member is formed of plastic. In this embodiment, the bracket member is preferably integrally resin formed, thus further reducing manufacturing cost.

The distal end portion of the blade shoe may have a guide portion depending therefrom along the side surface of the slide portion of the bracket member. In this embodiment, as the distal end portion of the blade shoe travels along the slide portion of the bracket member, the guide portion guides travel of the distal end portion of the blade shoe.

The guide portion may be disposed on opposite sides of the slide portion of the bracket member, such that the distal end portion of the blade shoe has a cup-shaped cross section. In this embodiment, as the distal end portion of the blade shoe travels along the slide portion of the bracket member, the guide portion guides the travel of the distal end portion of the blade shoe on opposite sides thereof, thereby securely guiding travel of the distal end portion of the blade shoe.

The slide portion of the bracket member may extend upwardly along the side surface of the distal end portion of the blade shoe to guide the distal end portion of the blade shoe. In this embodiment, as the distal end portion of the blade shoe travels along the slide portion of the bracket member, the slide portion of the bracket member guides the travel of the distal end portion of the blade shoe.

The slide portion may be disposed on opposite sides of the distal end portion of the blade shoe. The slide portion preferably has a cup-shaped cross section in this embodiment. As the distal end portion of the blade shoe travels along the slide portion of the bracket member, the slide portion of the bracket member guides the travel of the distal end portion of the blade shoe on opposite sides thereof, thereby securely guiding travel of the distal end portion of the blade shoe.

The slide portion of the bracket member optionally has a convexly curved surface. The slide portion of the bracket member is preferably formed such that a contact point of the slide portion of the bracket member with the blade spring moves toward the central portion of the blade spring in the longitudinal direction in accordance with the deformation of the blade spring due to increase in chain tension.

In this embodiment, when the blade shoe and the blade spring are pressed inwardly by the increased chain tension, the effective length of the blade spring is shortened between the proximal end portion of the blade shoe and the slide portion of the bracket member and thus the spring rate can be made greater. Thereby, a resilient force of the blade spring increases in accordance with the increase of the chain tension. Thus the tensioner effectively responds to the increase in chain tension.

In one embodiment, the slide portion of the bracket member is preferably formed of a plurality of curved protrusions that are disposed along the length of the blade spring.

### BRIEF DESCRIPTION OF THE DRAWINGS

FIG. 1 is a front elevational view of a blade-type tensioner according to an embodiment of the present invention.
FIG. 2 is a cross sectional view of FIG. 1 taken along line II-II.
FIG. 3 is a front elevational view of a blade-type tensioner according to another embodiment of the present invention.
FIG. 4 is a cross sectional view of FIG. 3 taken along line IV-IV.
FIG. 5 is a front elevational view of a prior art blade-type tensioner.
FIG. 6 is a cross sectional view of FIG. 5 taken along line VI-VI.

### DETAILED DESCRIPTION OF THE INVENTION

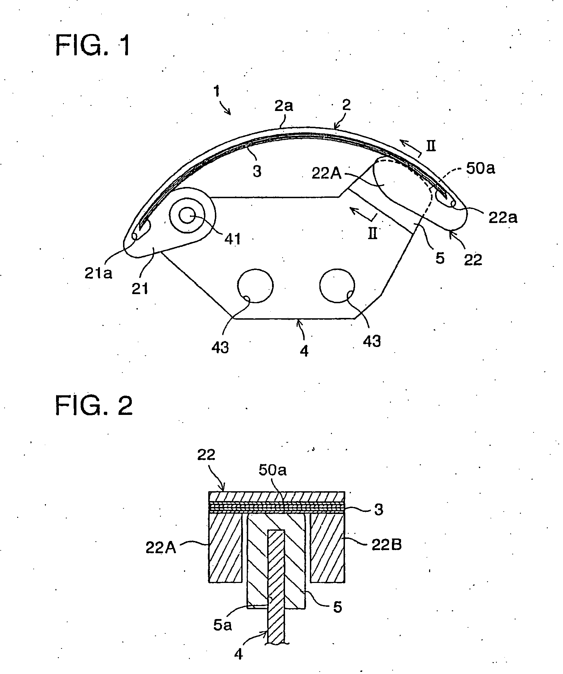

As shown in FIG. 1, a blade-type tensioner (1) includes a plastic blade shoe (2) with an arcuately curved chain sliding surface (2a), a plurality of leaf-spring-shaped metal blade springs (3) provided and stacked on an opposite side from the chain sliding surface (2a) of the blade shoe (2) to exert a spring force on a chain (not shown) via the blade shoe (2), and a metal bracket member (4) to support the blade shoe (2).

The blade shoe (2) has indentations (21a, 22a) formed on opposite ends to receive each end of the blade spring (3). A proximal end portion (21) of the blade shoe (2) has a hole to receive a pin (41) fixed on one end of the bracket member (4). The proximal end portion (21) is rotatably supported around the pin (41).

A distal end portion (22) of the blade shoe (2) has a pair of bifurcated and downwardly extending guide portions (22A, 22B) on the opposite sides in the width direction of the blade spring (3), as shown in FIG. 2. The distal end portion (22) has a cup-shaped cross section. A slide portion (5) is disposed between the guide portions (22A) and (22B) of the distal end (22) of the blade shoe (2). Each of the guide portions (22A, 22B) extends downwardly along the side surface of the slide portion (5).

The resin formed slide portion (5) has a slit (5a) formed therein to receive the end of the bracket member (4). The slide portion (5) is integrally fitted to the metal bracket member (4) through processing including, but not limited to, insert forming, welding, bonding or the like.

The slide portion (5) preferably has a convexly curved surface (50a) on its upper surface. One end of the blade spring (3) is slidably supported on the convexly curved surface (50a) of the slide portion (5). The blade spring (3) is in contact with the convexly curved surface (50a) of the slide portion (5) at all times to slide on the convexly curved surface (50a) as the blade shoe (2) deforms in accordance with an inward load from the chain.

In this example, the convexly curved surface (50a) is a single curved surface with a single radius of curvature, but it may alternatively be formed of a blended curved surface with a plurality of radii of curvature. Alternatively, a plurality of curved protrusions may be formed on the convexly curved surface (50a) along the length of the blade spring (3).

The bracket member (4) also has a plurality of attachment holes (43) formed therein to receive attachment bolts. During operation, a chain (not shown) slides and travels along the chain sliding surface (2a) of the blade shoe (2) and during that time, a spring force in accordance with deformation of the blade spring (3) acts on the chain via the blade shoe (2).

When the chain tension varies during operation, the blade spring (3) slides on the convexly curved surface (50a) of the slide portion (5) according to the inward force of the chain and the proximal end portion (21) of the blade shoe (2) rotates around the support shaft portion (41). Thereby, the radius of curvature of the blade spring (3) varies.

Since the slide portion (5) of the bracket member (4) is formed of plastic, bending the bracket member (4) to form the slide portion (5) is not required, and manufacturing cost is thus reduced. Also, since the plastic slide portion (5) contacts the metal blade spring (3), the travel of the blade spring (3) is conducted smoothly as the blade spring (3) slides along the slide portion (5) during deformation of the blade spring (3), thereby preventing seizure of the slide portion (5).

Moreover, when the distal end portion (22) of the blade shoe (2) travels along the slide portion (5) in accordance with the sliding movement of the blade spring (3), the travel of the distal end portion (22) of the blade shoe (2) is guided sideways in opposite directions by the guide portions (22A, 22B), thereby securely guiding the distal end portion (22).

Furthermore, the convexly curved surface (50a) of the slide portion (5) is preferably formed, such that a contact point of the convexly curved portion (50a) with the blade spring (3) moves toward the central side of the blade spring (3) in the elongated direction, in accordance with the deformation of the blade spring (3) due to the increase in the chain tension. For example, as shown in FIG. 1, the curvature of the convexly curved surface (50a) of the slide portion (5) is made slightly greater than the curvature of the blade spring (3), that is, the radius of the curvature of the convexly curved surface (50a) of the slide portion (5) is made slightly smaller than the radius of the curvature of the blade spring (3). When the blade spring (3) deforms toward a more flattened shape according to the inward force from the chain, a contact point of the convexly curved portion (50a) of the slide portion (5) with the blade spring (3) moves toward the center of the blade spring (3) in the elongated direction.

When the blade shoe (2) and the blade spring (3) are pressed inwardly by the increased chain tension, the effective length of the blade spring (3) supported between the proximal end portion (21) of the blade shoe (2) and the slide portion (5) of the bracket member (4) is lessened to enlarge the spring rate. As a result, a resilient force of the blade spring (3) is increased in accordance with the increase in the chain tension so that the tensioner effectively responds to the increase in the chain tension.

Alternatively, the slide portion (5) of the bracket member (4) may have a plurality of curved protrusions disposed along the length of the blade spring (3). In this embodiment, when the blade shoe (2) and the blade spring (3) are pressed inwardly due to the increase in chain tension, the blade spring (3) gradually comes into contact with the curved protrusions on the more central side in the elongated direction. Therefore, as with the above-mentioned embodiment shown in FIG. 1, the effective length of the blade spring (3) is lessened to enlarge the spring rate. As a result, a resilient force of the blade spring (3) is increased in accordance with the increase in the chain tension so that the tensioner effectively responds to the increase in the chain tension.

In the above-mentioned embodiment, the plastic slide portion (5) is fixed to the metal bracket member (4), but the entire bracket member including the slide portion may be formed of plastic to further reduce manufacturing cost.

In addition, the guide portion of the distal end portion (22) of the blade shoe (2) is preferably disposed on opposite sides of the slide portion (5) of the bracket member (4), but either one of the guide portions may be omitted.

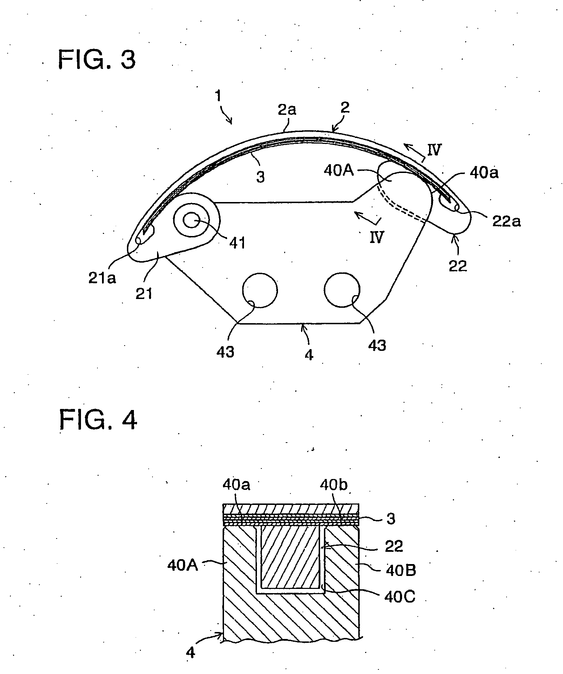

FIGS. 3 and 4 illustrate another embodiment of the present invention. In these drawings, like reference numbers indicate identical or functionally similar elements. In this embodiment, the shapes of the distal end portion (22) of the blade shoe (2) and the slide portion of the bracket member (4) are different from those in the previous embodiment. The bracket member (4) is preferably formed of plastic.

As shown in FIGS. 3 and 4, the plastic bracket member (4) is formed with a pair of bifurcated slide portions (40A, 40B) at one end. The distal end portion (22) of the blade shoe (2) is slidably inserted into a groove (40c) formed between the slide portions (40A) and (40B). In other words, the slide portions (40A, 40B) extend upwardly from the bracket member (4) along the side surfaces of the distal end portion (22) of the blade shoe (2) to guide the distal end portion (22) of the blade shoe (2).

Similar to the previous embodiment, since the slide portions (40A, 40B) of the bracket member (4) are formed of plastic, bending the bracket member (4) to form the slide portions (40A, 40B) is not required, thus reducing manufacturing cost. Also, since the plastic slide portions (40A, 40B) contact the metal blade spring (3), the travel of the blade spring (3) is conducted smoothly as the blade spring (3) slides along the slide portions (40A, 40B) during deformation of the blade spring (3), thereby preventing seizure of the slide portions (40A, 40B).

Moreover, when the distal end portion (22) of the blade shoe (2) travels along the slide portions (40A, 40B) of the bracket member (4) in accordance with the sliding movement of the blade spring (3), the travel of the distal end portion (22) of the blade shoe (2) is guided sideways in opposite directions by the slide portions (40A, 40B), thereby securely guiding the distal end portion (22).

In each of the embodiments shown in FIGS. 1 to 4, the slide portion of the bracket member (4) is in contact with the blade spring (3), but the present invention is not limited to such an example. The plastic slide portion of the bracket member (4) may abut the distal end portion similar to the distal end portion (see FIG. 5) of the blade shoe in the prior art blade-type tensioner.

In addition, the blade-type tensioner according to the present invention is especially suitable for a timing chain in an automotive engine, but it is also applicable to an auxiliary drive chain such as an oil pump drive chain.

Accordingly, it is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1. A blade tensioner for applying tension to a chain, comprising:
a) an arcuately shaped blade shoe having a chain sliding face;
b) at least one blade spring arranged on a side of the blade shoe opposite the chain sliding face that applies spring force to the chain through the blade shoe; and
c) a bracket including a shaft bearing section to rotatably support a proximal end section of the blade shoe and a sliding section to slidably support an end of the blade spring at a distal end section of the blade shoe when the blade shoe and the blade spring deform.

2. The blade tensioner of claim 1, wherein the sliding section is made of plastic.

3. The blade tensioner of claim 1, wherein the blade spring is a leaf spring.

4. The blade tensioner of claim 1, wherein the bracket is made of plastic.

5. The blade tensioner of claim 1, wherein the distal end section of the blade shoe includes at least one guide section vertically provided along at least one side of the sliding section.

6. The blade tensioner of claim 5, wherein guide sections are arranged on both sides of the sliding section of the bracket and the distal end section of the blade shoe has a cup-shaped cross-sectional shape.

7. The blade tensioner of claim 1, wherein the sliding section of the bracket is vertically provided along at least one side of the distal end section of the blade shoe and guides the distal end section of the blade shoe.

8. The blade tensioner of claim 7, wherein the sliding section is arranged on both sides of the distal end section of the blade shoe and the sliding section has a cup-shaped cross-sectional shape.

9. The blade tensioner of claim 1, wherein the sliding section has a convex surface.

10. The blade tensioner of claim 1, wherein the sliding section of the bracket is formed so that a contact point between the sliding section of the bracket and the blade spring moves to a longitudinally middle section of the blade spring as the blade spring deforms.

11. The blade tensioner of claim 10, wherein the sliding section of the bracket includes a plurality of curved surface protrusions arranged along a longitudinal direction of the blade spring.

12. The blade tensioner of claim 1, wherein a radius of curvature of a surface of the sliding section contacting the blade spring is smaller than a radius of curvature of the blade spring.
